(19) Europäisches Patentamt
European Patent Office
Office européen des brevets

(11) EP 4 419 583 B1

(12) **FASCICULE DE BREVET EUROPEEN**

(45) Date de publication et mention de la délivrance du brevet:
**03.12.2025 Bulletin 2025/49**

(21) Numéro de dépôt: **22802210.9**

(22) Date de dépôt: **12.10.2022**

(51) Classification Internationale des Brevets (IPC):
***C08J 3/20*** *(2006.01)* ***C08F 210/02*** *(2006.01)*
***B60C 1/00*** *(2006.01)* ***C08K 5/548*** *(2006.01)*
***C08K 3/36*** *(2006.01)*

(52) Classification Coopérative des Brevets (CPC):
(C-Sets disponibles)
**C08J 3/203; B60C 1/00; C08F 210/02; C08K 3/36; C08K 5/548;** C08J 2323/08; C08J 2347/00 (Cont.)

(86) Numéro de dépôt international:
**PCT/FR2022/051917**

(87) Numéro de publication internationale:
**WO 2023/067265 (27.04.2023 Gazette 2023/17)**

(54) **PROCEDE DE PREPARATION D'UNE COMPOSITION DE CAOUTCHOUC**

VERFAHREN ZUR HERSTELLUNG EINER KAUTSCHUKZUSAMMENSETZUNG

PROCESS FOR THE PREPARATION OF A RUBBER COMPOSITION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **18.10.2021 FR 2111013**

(43) Date de publication de la demande:
**28.08.2024 Bulletin 2024/35**

(73) Titulaire: **COMPAGNIE GENERALE DES ETABLISSEMENTS MICHELIN**
**63000 Clermont-Ferrand (FR)**

(72) Inventeurs:
- **ARAUJO DA SILVA, José-Carlos**
  **63040 CLERMONT-FERRAND Cedex 9 (FR)**
- **PRAS, Maxime**
  **63040 CLERMONT-FERRAND Cedex 9 (FR)**
- **FERRAND, Thomas**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2020/074804** **WO-A1-2021/053294**
**WO-A1-2021/053296** **WO-A1-2021/123569**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08F 210/02, C08F 4/52;**
**C08K 3/36, C08L 23/08;**
**C08K 3/36, C08L 47/00;**
**C08K 5/548, C08L 23/08;**
**C08K 5/548, C08L 47/00;**
C08F 210/02, C08F 236/06, C08F 236/22, C08F 2500/03, C08F 2500/21, C08F 2500/27, C08F 2500/32;
C08F 210/02, C08F 236/22, C08F 2500/03, C08F 2500/17, C08F 2500/21, C08F 2500/27, C08F 2500/32

## Description

Le domaine de la présente invention est celui des procédés de préparation des compositions de caoutchouc renforcées par de la silice et contenant des copolymères de diènes conjugués riches en unités éthylène.

Il est connu de réticuler les élastomères diéniques dans une composition de caoutchouc pour conférer à la composition de caoutchouc les propriétés d'élasticité, de rigidité et de renforcement souhaitées selon l'application envisagée. Il est donc habituel depuis de très nombreuses années de vulcaniser, c'est-à-dire réticuler sous l'action du soufre, les élastomères diéniques dans une composition de caoutchouc, en particulier destinée à être utilisée dans un pneumatique. La réaction de vulcanisation procède d'une réaction entre les unités diéniques de l'élastomère et un système de réticulation qui comprend des réactifs à base de soufre.

Généralement, les systèmes de vulcanisation comprennent en plus du soufre au moins un accélérateur primaire tel qu'un sulfénamide, un thiazole et un accélérateur secondaire tel qu'un thiurame, un xanthate, un dithiocarbamate ou leur sel respectif. La combinaison de l'accélérateur primaire et de l'accélérateur secondaire permet d'accélérer la réaction de vulcanisation des compositions de caoutchouc diénique, donc de diminuer le temps de vulcanisation. Mais cette accélération de la vitesse de vulcanisation ne doit pas s'accompagner d'une vulcanisation prématurée (ou grillage) de la composition. Ce phénomène de vulcanisation prématurée, s'il se produit, est pénalisant dans les étapes de préparation et de mise en forme de la composition de caoutchouc, en particulier le calandrage ou l'extrusion, étapes qui précèdent généralement l'étape de vulcanisation de la composition de caoutchouc diénique. En effet, le grillage peut conduire à de fortes élévations de viscosité des compositions de caoutchouc qui deviennent alors beaucoup plus difficiles à travailler et à mettre en œuvre industriellement.

Pour éviter une vulcanisation prématurée, le soufre et les accélérateurs primaires et secondaires sont généralement introduits dans la composition de caoutchouc à une température bien inférieure à la température de vulcanisation et leur incorporation par malaxage dans la composition de caoutchouc est aussi réalisée à une température inférieure à celle de la température de vulcanisation. C'est pourquoi, les procédés traditionnels de préparation des compositions de caoutchouc diéniques comportent deux phases de préparations successives bien connues de l'homme du métier. La première est une étape de malaxage thermomécanique des constituants de la composition de caoutchouc à l'exception du soufre et des accélérateurs. La première étape est conduite à haute température, typiquement jusqu'à une température maximale supérieure à 110°C, de préférence de 130°C à 180°C. Elle est qualifiée de phase de travail ou phase non productive. La deuxième étape, dite phase productive, est conduite à plus basse température, typiquement inférieure à 110°C, par exemple entre 40°C et 100°C, phase de finition au cours de laquelle est incorporé le système de vulcanisation.

La Demanderesse a décrit des élastomères diéniques qui sont considérés comme fortement saturés en raison de leur taux d'éthylène qui est supérieur à 50% en mole. On peut citer les copolymères d'éthylène et de 1,3-butadiène décrits par exemple dans le document WO 2007054223, les copolymères d'éthylène et d'un 1,3-diène ramifié à longue chaîne ou encore les terpolymères d'éthylène, d'un 1,3-diène ramifié à longue chaîne et de 1,3-butadiène décrits par exemple dans les documents respectifs WO 2019180356 A1, WO 2020074804 A1 et WO 2021053051 A1. WO 2021053296 A1 divulgue une composition de caoutchouc comprenant un copolymère d'éthylène et d'un 1,3-diène ramifié. L'utilisation dans une composition de caoutchouc de l'un ou l'autre des deux derniers copolymères que sont un copolymère d'éthylène et d'un 1,3-diène ramifié à longue chaîne et un terpolymère d'éthylène, d'un 1,3-diène ramifié à longue chaîne et de 1,3-butadiène, confère à la composition de caoutchouc une rigidité plus faible que ne le ferait un élastomère fortement saturé, copolymère d'éthylène et de 1,3-butadiène. Une rigidité plus faible d'une composition de caoutchouc qui est synonyme d'une plus grande déformabilité de la composition de caoutchouc peut rendre l'utilisation de la composition de caoutchouc encore plus intéressante pour certains usages, comme par exemple dans une bande de roulement pour pneumatique. En effet, une composition de caoutchouc destinée à être utilisée dans une bande de roulement pour pneumatique doit être suffisamment déformable pour satisfaire aux exigences de performance d'adhérence. Comme une bande de roulement doit également présenter une faible résistance au roulement, la Demanderesse a poursuivi ses efforts pour diminuer encore davantage l'hystérèse des compositions de caoutchouc comprenant un élastomère diénique fortement saturé.

Contre toute attente, la Demanderesse a découvert un nouveau procédé de préparation d'une composition de caoutchouc comprenant un élastomère fortement saturé pour atteindre ce but sans pénaliser la déformabilité de la composition de caoutchouc.

Ainsi, l'invention concerne un procédé de préparation d'une composition de caoutchouc qui comprend plus de 50 pce d'un élastomère diénique fortement saturé, une charge renforçante et un agent de couplage silane

l'élastomère diénique fortement saturé étant un copolymère contenant des unités éthylène et des unités d'un 1,3-diène de formule (I),

$$CH_2{=}CR{-}CH{=}CH_2 \qquad (I)$$

le symbole R représentant une chaîne hydrocarbonée ayant 3 à 20 atomes de carbone les unités éthylène représentant au moins 50% en mole des unités monomères du copolymère,
la charge renforçante comprenant une silice,
lequel procédé comprend une étape a) suivie d'une étape b) :

a) le mélangeage par malaxage à une température supérieure à 110°C de l'élastomère diénique fortement saturé, de la charge renforçante et de l'agent de couplage silane avec un accélérateur secondaire dithiocarbamate,
b) puis l'incorporation de soufre et d'un sulfénamide dans la composition de caoutchouc par malaxage à une température inférieure à 110°C.

## Description détaillée

Tout intervalle de valeurs désigné par l'expression "entre a et b" représente le domaine de valeurs supérieur à "a" et inférieur à "b" (c'est-à-dire bornes "a" et "b" exclues) tandis que tout intervalle de valeurs désigné par l'expression "de a à b" signifie le domaine de valeurs allant de "a" jusqu'à "b" (c'est-à-dire incluant les bornes strictes "a" et "b"). L'abréviation "pce" signifie parties en poids pour cent parties d'élastomère (du total des élastomères si plusieurs élastomères sont présents).

Sauf indication contraire, les taux des unités résultant de l'insertion d'un monomère dans un polymère sont exprimés en pourcentage molaire par rapport à la totalité des unités monomères qui constituent le polymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges ...

Le procédé conforme à l'invention est un procédé de préparation d'une composition de caoutchouc. Il a pour caractéristique essentielle de comprendre deux étapes de malaxage, une à l'étape a) et une à l'étape b). Au cours de la l'étape a), l'élastomère diénique, la charge renforçante et l'agent de couplage utiles aux besoins de l'invention sont malaxés en présence d'un dithiocarbamate, accélérateur secondaire, typiquement dans un mélangeur approprié tel qu'un mélangeur interne usuel. La température de malaxage à l'étape a) est supérieure à 110°C, préférentiellement comprise entre 110°C et 170°C, avantageusement supérieure à 120°C et inférieure à 160°C. Les plages de température entre 110°C et 170°C et entre 120°C et 160°C correspondent à des valeurs de températures maximales atteintes par le mélange malaxé dans le mélangeur pendant l'étape a). Typiquement, le malaxage au cours de l'étape a) est poursuivi jusqu'à ce que le mélange malaxé atteigne la température maximale de malaxage avant d'être extrait du mélangeur. La durée totale du malaxage à l'étape a) est de préférence comprise entre 1 et 15 minutes. Le mélange préparé à l'issue de l'étape a) est récupéré, puis refroidi pour pouvoir procéder à l'étape b) qui est réalisée à plus basse température, en l'espèce à une température inférieure à 110°C. L'étape b) est l'étape au cours de laquelle sont incorporés du soufre et un sulfénamide dans la composition de caoutchouc obtenue après l'étape a). L'incorporation du soufre et du sulfénamide dans la composition de caoutchouc est typiquement réalisée par malaxage dans un mélangeur externe tel qu'un mélangeur à cylindres, généralement pendant une durée comprise entre 2 et 15 minutes. Le malaxage à l'étape b) se fait à une température inférieure à 110°C, préférentiellement à une température allant de 20°C à 100°C.

L'élastomère utile aux besoins de l'invention est un élastomère diénique fortement saturé, de préférence statistique, qui comprend des unités éthylène résultant de la polymérisation d'éthylène. De manière connue, l'expression « unité éthylène » fait référence au motif $-(CH_2-CH_2)-$ résultant de l'insertion de l'éthylène dans la chaîne élastomère. L'élastomère diénique fortement saturé est riche en unité éthylène, puisque les unités éthylène représentent au moins 50% en mole de l'ensemble des unités monomères de l'élastomère.

De préférence, l'élastomère diénique fortement saturé comprend au moins 60% molaire d'unité éthylène, particulièrement au moins 65% molaire d'unité éthylène. Autrement dit, les unités éthylène représentent préférentiellement au moins 60% en mole de l'ensemble des unités monomères de l'élastomère diénique fortement saturé, particulièrement au moins 65% en mole de l'ensemble des unités monomères de l'élastomère diénique fortement saturé. Plus particulièrement, les unités éthylène représentent au moins 70% en mole de l'ensemble des unités monomères de l'élastomère diénique fortement saturé. De préférence, les unités éthylène représentent au plus 90% en mole de l'ensemble des unités monomères de l'élastomère diénique fortement saturé. De manière plus préférentielle, les unités éthylène représentent au plus 85% en mole de l'ensemble des unités monomères de l'élastomère diénique fortement saturé. Avantageusement, l'élastomère diénique fortement saturé comprend de 60% à 90% molaire d'unité éthylène, particulièrement de 65% à 90% molaire d'unité éthylène, pourcentage molaire calculé sur la base de l'ensemble des unités monomères de l'élastomère diénique fortement saturé. Plus avantageusement, l'élastomère diénique fortement saturé

comprend de 60% à 85% molaire d'unité éthylène, particulièrement de 65% à 85% molaire d'unité éthylène. Plus particulièrement, l'élastomère diénique fortement saturé comprend de 70% à 85% molaire d'unité éthylène.

L'élastomère diénique fortement saturé comprend aussi des unités d'un 1,3-diène de formule (I) résultant de la polymérisation du 1,3-diène de formule (I)

$$CH_2=CR-CH=CH_2 \qquad (I).$$

Dans la formule (I) du 1,3-diène, la chaîne hydrocarbonée représentée par le symbole R est une chaîne hydrocarbonée de 3 à 20 atomes de carbone. De préférence, le symbole R représente une chaîne hydrocarbonée ayant 6 à 16 atomes de carbone. La chaîne hydrocarbonée représentée par le symbole R peut être une chaîne saturée ou insaturée. De préférence, le symbole R représente une chaîne aliphatique. Elle peut être une chaîne linéaire ou ramifiée, auquel cas le symbole R représente une chaîne linéaire ou ramifiée. De préférence, la chaîne hydrocarbonée est acyclique, auquel cas le symbole R représente une chaîne acyclique. Mieux, le symbole R représente une chaîne hydrocarbonée acyclique insaturée et ramifiée. La chaîne hydrocarbonée représentée par le symbole R est avantageusement une chaîne acyclique insaturée et ramifiée contenant de 3 à 20 atomes de carbone, en particulier de 6 à 16 atomes de carbone. Très avantageusement, le 1,3-diène de formule (I) est le myrcène, le β-farnésène ou leur mélange.

Selon un mode de réalisation préférentiel de l'invention, le 1,3-diène de formule (I) est le myrcène.

Selon un autre mode de réalisation préférentiel de l'invention, le 1,3-diène de formule (I) est le β-farnésène.

De préférence, l'élastomère diénique fortement saturé diène présente une température de transition vitreuse inférieure à -35°C, de préférence comprise entre -90°C et -35°C.

Selon un mode de réalisation particulier de l'invention, l'élastomère diénique fortement saturé contient en outre des unités d'un 1,3-diène ayant 4 à 6 atomes de carbone. A titre de 1,3-diène ayant 4 à 6 atomes de carbone, on peut citer en particulier le 1,3-butadiène, l'isoprène et leur mélange. Le 1,3-diène ayant 4 à 6 atomes de carbone est préférentiellement le 1,3-butadiène.

Selon une première variante préférentielle de l'invention, l'élastomère diénique fortement saturé est un copolymère d'éthylène et d'un 1,3-diène de formule (I).

Selon une deuxième variante préférentielle de l'invention, l'élastomère diénique fortement saturé est un terpolymère, copolymère d'éthylène, d'un 1,3-diène de formule (I) et d'un 1,3-diène ayant 4 à 6 atomes de carbone, préférentiellement un copolymère d'éthylène, d'un 1,3-diène de formule (I) et de 1,3-butadiène. Selon la deuxième variante, le terpolymère contient préférentiellement au moins 1% en mole d'unités du 1,3-diène de formule (I). De préférence, le terpolymère contient au plus 20% en mole d'unités du 1,3-diène de formule (I). De manière plus préférentielle, le terpolymère contient au plus 10% en mole d'unités du 1,3-diène de formule (I).

Selon un mode de réalisation de l'invention, le terpolymère contient plus de 60% à 90% en mole d'unités éthylène et de 1% à 20%, préférentiellement de 1% à 10% en mole d'unités du 1,3-diène de formule (I). Selon ce mode de réalisation de l'invention, le terpolymère contient préférentiellement moins de 30% en mole d'unités du 1,3-diène ayant 4 à 6 atomes de carbone ou contient préférentiellement moins de 20% en mole d'unités du 1,3-diène ayant 4 à 6 atomes de carbone.

Selon un autre mode de réalisation de l'invention, le terpolymère contient de 70% à 90% en mole d'unités éthylène et de 1% à 20%, préférentiellement de 1% à 10% en mole d'unités du 1,3-diène de formule (I). Selon ce mode de réalisation de l'invention, le terpolymère contient préférentiellement moins de 20% en mole d'unités du 1,3-diène ayant 4 à 6 atomes de carbone.

Selon encore un autre mode de réalisation de l'invention, le terpolymère contient plus de 60% à 85% en mole d'unités éthylène et de 1% à 20%, préférentiellement de 1% à 10% en mole d'unités du 1,3-diène de formule (I). Selon ce mode de réalisation de l'invention, le terpolymère contient préférentiellement moins de 30% en mole d'unités du 1,3-diène ayant 4 à 6 atomes de carbone ou contient préférentiellement moins de 20% en mole d'unités du 1,3-diène diène ayant 4 à 6 atomes de carbone.

Selon encore un autre mode de réalisation de l'invention, le terpolymère contient de 70% à 85% en mole d'unités éthylène et de 1% à 20%, préférentiellement de 1% à 10% en mole d'unités du 1,3-diène de formule (I). Selon ce mode de réalisation de l'invention, le terpolymère contient préférentiellement moins de 20% en mole d'unités du 1,3-diène ayant 4 à 6 atomes de carbone.

Selon un mode de réalisation particulier de l'invention, en particulier lorsque le 1,3-diène ayant 4 à 6 atomes de carbone est le 1,3-butadiène, le terpolymère contient en outre des unités ayant un motif 1,2-cyclohexanediyle représenté par la formule (1).

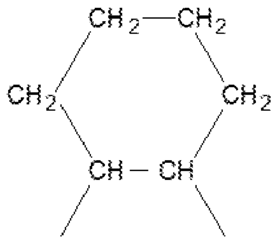

(1)

La présence de la structure cyclique de formule (1) dans le terpolymère résulte d'une insertion très particulière de l'éthylène et de 1,3-butadiène lors de la polymérisation. La teneur en unités de motif 1,2-cyclohexanediyle dans le terpolymère varie selon les teneurs respectives en éthylène et en 1,3-butadiène dans le terpolymère. Le terpolymère contient de préférence moins de 15% en mole d'unités de motif 1,2-cyclohexanediyle.

De préférence, le terpolymère a une température de transition vitreuse inférieure à -35°C, préférentiellement comprise entre -70°C et -35°C.

L'élastomère fortement saturé peut être préparé par la copolymérisation d'un mélange monomère contenant de l'éthylène et le 1,3-diène de formule (I). Le mélange monomère est typiquement un mélange d'éthylène et d'un 1,3-diène de formule (I) pour préparer un copolymère d'éthylène et d'un 1,3-diène de formule (I) ; il est un mélange d'éthylène, d'un 1,3-diène de formule (I) et d'un 1,3-diène ayant 4 à 6 atomes de carbone pour préparer un terpolymère d'éthylène, d'un 1,3-diène de formule (I) et d'un 1,3-diène ayant 4 à 6 atomes de carbone.

L'élastomère diénique fortement saturé peut être obtenu par polymérisation des monomères en présence d'un système catalytique comprenant un métallocène de formule (II) et un organomagnésien de formule (III)

$P(Cp^1Cp^2)Nd(BH_4)_{(1+y)}\text{-}L_y\text{-}N_x$ (II)

$MgR^1R^2$ (III)

$Cp^1$ et $Cp^2$, identiques ou différents, étant choisis dans le groupe constitué par le groupe cyclopentadiényle de formule $C_5H_4$, le groupe fluorényle non substitué de formule $C_{13}H_8$ et les groupes fluorényles substitués,
P étant un groupe pontant les deux groupes $Cp^1$ et $Cp^2$ et représentant un groupe $ZR^3R^4$, Z représentant un atome de silicium ou de carbone, $R^3$ et $R^4$, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofuranne,
$R^1$ et $R^2$, identiques ou différents, représentant un groupe carboné.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

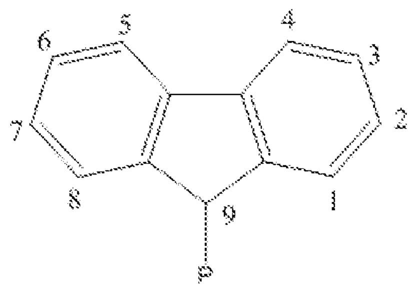

Le groupe P pontant les deux groupes $Cp^1$ et $Cp^2$ désigne de préférence le groupe $SiMe_2$.

Le système catalytique peut être préparé de façon traditionnelle par un procédé analogue à celui décrit dans la demande de brevet WO 2007054224 ou WO 2007054223. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère conforme à l'invention.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un 1,3-diène, l'éthylène ou un mélange d'éthylène et d'un 1,3-diène. Le système catalytique ainsi obtenu peut être utilisé de suite dans le procédé conforme à l'invention ou être stocké sous atmosphère inerte avant son utilisation dans le procédé conforme à l'invention.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

L'organomagnésien est de formule $MgR^1R^2$ dans laquelle $R^1$ et $R^2$, identiques ou différents, représentent un groupe carboné. On entend par groupe carboné un groupe qui contient un ou plusieurs atomes de carbone. De préférence, $R^1$ et $R^2$ contiennent 2 à 10 atomes de carbone. De manière plus préférentielle, $R^1$ et $R^2$ représentent chacun un alkyle. L'organomagnésien est avantageusement un dialkylmagnésien, mieux le butyléthylmagnésium ou le butyloctylmagnésium, encore mieux le butyloctylmagnésium.

Le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

De préférence, le métallocène est de formule (II) dans laquelle $Cp^1$ et $Cp^2$, identiques ou différents, sont choisis dans le groupe constitué par les groupes fluorényles substitués et le groupe fluorényle non substitué de formule $C_{13}H_8$. Pour cette variante, conviennent en particulier les métallocènes de formules suivantes dans lesquelles le symbole Flu présente le groupe fluorényle de formule $C_{13}H_8$ : $[\{Me_2SiFlu_2Nd(\mu\text{-}BH_4)_2Li(THF)\}_2]$ ; $[Me_2SiFlU_2Nd(\mu\text{-}BH_4)_2Li(THF)]$ ; $[Me_2SiFlu_2Nd(\mu\text{-}BH_4)(THF)]$ ; $[\{Me_2SiFlu_2Nd(\mu\text{-}BH_4)(THF)\}_2]$ ; $[Me_2SiFlu_2Nd(\mu\text{-}BH_4)]$. En particulier conviennent les métallocènes de formules suivantes dans lesquelles le symbole Flu présente le groupe fluorényle de formule $C_{13}H_8$ : $[\{Me_2SiFlu_2Nd(\mu\text{-}BH_4)_2Li(THF)\}_2]$ ; $[Me_2SiFlu_2Nd(\mu\text{-}BH_4)_2Li(THF)]$; $[Me_2SiFlu_2Nd(\mu\text{-}BH_4)(THF)]$; $[\{Me_2SiFlu_2Nd(\mu\text{-}BH_4)(THF)\}_{2]}$ ; $[Me_2SiFlu_2Nd(\mu\text{-}BH_4)]$.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La copolymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C. De préférence, la

copolymérisation est conduite à pression constante d'éthylène.

Au cours de la polymérisation des monomères dans un réacteur de polymérisation, un ajout continu des monomères peut être réalisé dans le réacteur de polymérisation, auquel cas le réacteur de polymérisation est un réacteur alimenté. Ce mode de réalisation est tout particulièrement adapté pour la synthèse de copolymère statistique.

L'élastomère diénique fortement saturé peut être constitué d'un mélange d'élastomères diéniques fortement saturés qui se différencient les uns des autres par leurs microstructures ou par leurs macrostructures.

La composition de caoutchouc peut aussi contenir un élastomère diénique autre que l'élastomère diénique fortement saturé utile aux besoins de l'invention. Par élastomère (ou indistinctement caoutchouc) "diénique", doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non).

Le taux de l'élastomère diénique fortement saturé dans la composition de caoutchouc est d'au moins 50 parties en poids pour cent parties d'élastomère de la composition de caoutchouc (pce). De préférence, le taux de l'élastomère diénique fortement saturé dans la composition de caoutchouc varie dans un domaine allant de 80 à 100 pce. De manière plus préférentielle, il varie dans un domaine allant de 90 à 100 pce. Il est avantageusement de 100 pce.

Une autre caractéristique de la composition de caoutchouc conforme à l'invention est de contenir une charge renforçante. Le taux de charge renforçante dans la composition de caoutchouc est de préférence supérieur ou égal à 20 pce et inférieur ou égal à 200 pce, de manière très préférentielle supérieur ou égal à 25 pce et inférieur ou égal à 160 pce.

La charge renforçante utile aux besoins de l'invention comprend une silice. La silice représente plus de 50% en masse de la charge renforçante. De manière préférentielle, la silice représente plus de 85% en masse de la charge renforçante.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 $m^2/g$, de préférence comprises dans un domaine allant de 30 à 400 $m^2/g$, notamment de 60 à 300 $m^2/g$. Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17]. Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier.

On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR », « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

La charge renforçante peut comprendre tout type de charge dite renforçante autre que la silice, connue pour ses capacités à renforcer une composition de caoutchouc utilisable notamment pour la préparation de pneumatiques, par exemple un noir de carbone. Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés.

De préférence, le noir de carbone est utilisé à un taux inférieur ou égal à 20 pce, plus préférentiellement inférieur ou égal à 10 pce (par exemple le taux de noir de carbone peut être compris dans un domaine allant de 0,5 à 20 pce, notamment allant de 1 à 10 pce). Avantageusement, le taux de noir de carbone dans la composition de caoutchouc est inférieur ou égal à 5 pce. Dans les intervalles indiqués, on bénéficie des propriétés colorantes (agent de pigmentation noir) et anti-UV des noirs de carbone, sans pénaliser par ailleurs les performances typiques apportées par la silice.

Pour coupler la silice à l'élastomère diénique, il est bien connu d'utiliser un agent de couplage silane (ou agent de liaison) au moins bifonctionnel destiné à assurer une connexion suffisante, de nature chimique et/ou physique, entre la silice (surface de ses particules). L'agent de couplage est un silane. On utilise en particulier des organosilanes ou des polyorganosiloxanes au moins bifonctionnels. Par « bifonctionnel », on entend un composé possédant un premier groupe

fonctionnel capable d'interagir avec la silice et un second groupe fonctionnel capable d'interagir avec l'élastomère. On utilise notamment des silanes polysulfurés, dits « symétriques » ou « asymétriques » selon leur structure particulière, tels que décrits par exemple dans les demandes WO03/002648-A1 (ou US2005/016651-A1) et WO03/002649-A1 (ou US2005/016650-A1). Conviennent en particulier, sans que la définition ci-après soit limitative, des silanes polysulfurés répondant à la formule générale (III) suivante :

$$Z\text{-}A^1\text{-}S_x\text{-}A^1\text{-}Z \qquad \text{(III)}$$

dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en un alkylène en $C_1$-$C_4$, en particulier le propylène) ;
- les symboles Z, identiques ou différents, répondent à l'une des trois formules ci-après :

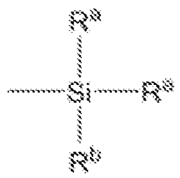 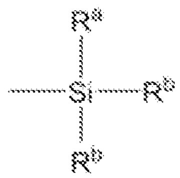 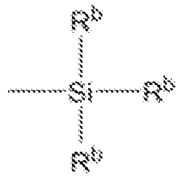

dans lesquelles :

- les radicaux $R^a$, substitués ou non substitués, identiques ou différents entre eux, représentent un groupe alkyle en $C_1$-$C_{18}$, un groupe cycloalkyle en $C_5$-$C_{18}$ ou un groupe aryle en $C_6$-$C_{18}$ (de préférence des groupes alkyle en $C_1$-$C_6$, le cyclohexyle ou le phényle, notamment des groupes alkyle en $C_1$-$C_4$, plus particulièrement le méthyle et/ou l'éthyle).
- les radicaux $R^b$, substitués ou non substitués, identiques ou différents entre eux, représentent un groupe alkoxyle en $C_1$-$C_{18}$ ou un groupe cycloalkoxyle en $C_5$-$C_{18}$ (de préférence un groupe choisi parmi les alkoxyles en $C_1$-$C_8$ et les cycloalkoxyles en $C_5$-$C_8$, plus préférentiellement encore un groupe choisi parmi les alkoxyles en $C_1$-$C_4$, en particulier le méthoxyle et l'éthoxyle), ou un groupe hydroxyle, ou tel que 2 radicaux Rb représentent un groupe dialkoxyle en $C_3$-$C_{18}$.

Dans le cas d'un mélange d'alkoxysilanes polysulfurés répondant à la formule (III) ci-dessus, notamment des mélanges usuels disponibles commercialement, la valeur moyenne des « x » est un nombre fractionnaire de préférence compris dans un domaine allant de 2 à 5, plus préférentiellement proche de 4.

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ commercialisé sous la dénomination « Si69 » par la société Evonik ou le disulfure de bis-(triéthoxysilylpropyle), en abrégé TESPD, de formule $[(C_2H_5O)_3Si(CH_2)_3S]_2$ commercialisé sous la dénomination « Si75 » par la société Evonik. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyle), plus particulièrement le tétrasulfure de bis-monoéthoxydiméthylsilylpropyle tel que décrit dans la demande de brevet WO02/083782-A1 précitée (ou US7217751-B2).

Bien entendu pourraient être également utilisés des mélanges des agents de couplage, en particulier ceux précédemment décrits.

L'agent de couplage silane est utilisé selon un taux avantageusement inférieur à 20 pce, étant entendu qu'il est en général souhaitable d'en utiliser le moins possible. Typiquement le taux d'agent de couplage silane représente de 0,5% à 15% en poids par rapport à la quantité de silice. Ce taux est aisément ajusté par l'homme du métier selon le taux de silice utilisé dans la composition.

La composition de caoutchouc conforme à l'invention peut également contenir, en complément des agents de couplage des agents de recouvrement de la silice ou plus généralement des agents d'aide à la mise en œuvre susceptibles de manière connue, grâce à une amélioration de la dispersion de la silice dans la matrice de caoutchouc et à un abaissement de la viscosité des compositions, d'améliorer leur faculté de mise en œuvre à l'état cru. Ces agents de recouvrement sont par exemple des silanes hydrolysables tels que des alkylalkoxysilanes, notamment des alkyltrialcoxysilanes, des polyols, des polyéthers, des amines primaires, secondaires ou tertiaires. A titre d'exemple, on peut citer le triméthoxy(octyl)silane, la diphénylguanidine. Les agents de recouvrement peuvent être utilisés seul ou en mélange. Ils sont généralement incorporés dans la composition de caoutchouc avant l'étape b) du procédé conforme à l'invention, par exemple au cours de l'étape a).

La composition de caoutchouc conforme à l'invention peut également contenir des activateurs de vulcanisation connus tels qu'oxyde de zinc, acide stéarique ou composés équivalents, ou encore des retardateurs de vulcanisation connus.

Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. Le soufre est utilisé à un taux préférentiel compris entre 0,3 et 12 pce, en particulier entre 0.5 et 5 pce.

Comme sulfénamide peuvent convenir les benzothiazolesulfénamides tels que le N-cyclohexyl-2-benzothiazolylsulfénamide, le N,N-dicyclohexyl-2-benzothiazolylsulfénamide, le N-tert-butyl-2-benzothiazolylsulfénamide, le N-méthyl-2-benzothiazolylsulfénamide, le N-éthyl-2-benzothiazolylsulfénamide, le N-propyl-2-benzothiazolylsulfénamide, le N-butyl-2-benzothiazolylsulfénamide, le N-pentyl-2-benzothiazolylsulfénamide, le N-hexyl-2-benzothiazolylsulfénamide, le N-pentyl-2-benzothiazolylsulfénamide, N-octyl-2-benzothiazolylsulfénamide, le N-2-éthylhexyl-2-benzothiazolylsulfénamide, le N-décyl-2-benzothiazolylsulfénamide, le N-dodécyl-2-benzothiazolylsulfénamide, le N,N-diméthyl-2-benzothiazolylsulfénamide, le N,N-diéthyl-2-benzothiazolylsulfénamide, le N,N-dipropyl-2-benzothiazolylsulfénamide, le N,N-dibutyl-2-benzothiazolylsulfénamide, le N,N-dipentyl-2-benzothiazolylsulfénamide, le N,N-dihexyl-2-benzothiazolylsulfénamide, le N,N-dipentyl-2-benzothiazolylsulfénamide, le N,N-dioctyl-2-benzothiazolylsulfénamide, le N,N-didécyl-2-benzothiazolylsulfénamide, le N,N-didodécyl-2-benzothiazolylsulfénamide et les mélanges de ces composés. Le sulfénamide est préférentiellement le N-cyclohexyl-2-benzothiazyle sulfénamide ("CBS"), le N,N-dicyclohexyl-2-benzothiazyle sulfénamide ("DCBS"), le N-ter-butyl-2-benzothiazyle sulfénamide ("TBBS"), ou les mélanges de ces composés, plus préférentiellement le N-cyclohexyl-2-benzothiazyle sulfénamide.

Comme dithiocarbamate peuvent convenir les dithiocarbamates de zinc ou de cuivre, préférentiellement les dithiocarbamates de zinc tels que le diméthyldithiocarbamate de zinc, le diéthyldithiocarbamate de zinc, le dipropyldithiocarbamate de zinc, le diisopropyldithiocarbamate de zinc, le dibutyldithiocarbamate de zinc, le dipentyldithiocarbamate de zinc, le dihexyldithiocarbamate de zinc, le diheptyldithiocarbamate de zinc, le dioctyldithiocarbamate de zinc, le di(2-éthylhexyl)dithiocarbamate de zinc, le didecyldithiocarbamate de zinc, le didodécyldithiocarbamate de zinc, le N-pentaméthylenedithiocarbamate de zinc, le N-éthyl-N-phényldithiocarbamate de zinc, le dibenzyldithiocarbamate de zinc et les mélanges de ces composés. Le dithiocarbamate est préférentiellement le diméthyldithiocarbamate de zinc, le diéthyldithiocarbamate de zinc, le dibutyldithiocarbamate de zinc, le dibenzyldithiocarbamate de zinc (ZBEC) ou les mélanges de ces composés, plus préférentiellement le dibenzyldithiocarbamate de zinc.

Le sulfénamide est utilisé à un taux préférentiel compris entre 0.5 et 10 pce, plus préférentiellement entre 0.5 et 5 pce. Le dithiocarbamate est utilisé à un taux préférentiel compris entre 0.5 et 5 pce, plus préférentiellement entre 1 et 5 pce.

La composition de caoutchouc peut comporter également tout ou partie des additifs habituellement utilisés dans les compositions de caoutchouc destinées à être utilisées dans un pneumatique, comme par exemple dans une bande de roulement pour pneumatique. De tels additifs sont par exemple des plastifiants tels que huiles, résines plastifiantes, des pigments, des agents de protection tels que cires anti-ozone, anti-ozonants chimiques, antioxydants, des activateurs de vulcanisation. Ces additifs sont généralement incorporés dans la composition de caoutchouc avant l'étape b) du procédé conforme à l'invention, par exemple au cours de l'étape a).

Après l'étape b) du procédé, la composition de caoutchouc peut être calandrée ou extrudée, de préférence pour former tout ou partie d'un profil d'une bande de roulement d'un pneumatique.

La composition de caoutchouc fabriquée selon le procédé conforme à l'invention est avantageusement vulcanisée, de préférence à une température supérieure à 110°C, notamment après avoir été extrudée ou calandrée sous la forme d'un article semi-fini comme une bande de roulement pour pneumatique. La composition de caoutchouc est vulcanisée à une température préférentiellement comprise entre 110°C et 180°C.

Les caractéristiques précitées de la présente invention, ainsi que d'autres, seront mieux comprises à la lecture de la description suivante des exemples de réalisation de l'invention, donnés à titre illustratif et non limitatif.

## Exemples

Tests et mesures :

1) Détermination de la macrostructure des polymères par chromatographie d'exclusion stérique (SEC) :

a) Principe de la mesure :

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et la dispersité (D = Mw/Mn) peuvent également être calculées.

b) Préparation du polymère :

Chaque échantillon est solubilisé dans du tétrahydrofurane à une concentration d'environ 1 g/L. Puis la solution est filtrée sur filtre de porosité 0.45$\mu$m avant injection.

c) Analyse SEC 3D :

Pour déterminer la masse molaire moyenne en nombre (Mn), et le cas échant la masse molaire moyenne en poids (Mw) et l'indice de polydispersité (Ip) des polymères, on utilise la méthode ci-dessous.

La masse molaire moyenne en nombre (Mn), la masse molaire moyenne en poids (Mw) et l'indice de polydispersité du polymère (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration.

La valeur de l'incrément d'indice de réfraction dn/dc de la solution de l'échantillon est mesurée en ligne en utilisant l'aire du pic détecté par le réfractomètre (RI) de l'équipement de chromatographie liquide. Pour appliquer cette méthode, il faut vérifier que 100% de la masse d'échantillon est injectée et éluée au travers de la colonne. L'aire du pic RI dépend de la concentration de l'échantillon, de la constante du détecteur RI et de la valeur du dn/dc. Pour déterminer les masses molaires moyennes, on utilise la solution à 1g/l précédemment préparée et filtrée que l'on injecte dans le système chromatographique. L'appareillage utilisé est une chaîne chromatographique « WATERS alliance ». Le solvant d'élution est le tétrahydrofurane contenant 250 ppm de BHT (2,6-diter-butyle 4-hydroxy toluène), le débit est de 1 mL.min$^{-1}$, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 $\mu$L. Le système de détection est composé d'un viscosimètre différentiel Wyatt de dénomination commerciale « VISCOSTAR II », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ».

Pour le calcul des masses molaires moyennes en nombre et de l'indice de polydispersité, est intégrée la valeur de l'incrément d'indice de réfraction d*n*/d*c* de la solution de l'échantillon obtenue ci-dessus. Le logiciel d'exploitation des données chromatographiques est le système « ASTRA de Wyatt ».

2) Détermination de la microstructure des élastomères :

a) Détermination de la microstructure des copolymères Ethylène-Myrcène :

La caractérisation spectrale et les mesures de la microstructure des copolymères Ethylène-Myrcène sont réalisées par spectroscopie de Résonance Magnétique Nucléaire (RMN). Spectromètre : Pour ces mesures, un spectromètre Bruker Avance III HD 400 MHz est utilisé, équipé d'une sonde Bruker cryo-BBFO z-grad 5 mm.

Expériences : Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétitions de 128 et un nombre d'incréments de 128. Les expériences sont réalisées à 25°C.

Préparation de l'échantillon : 25 mg d'échantillon sont solubilisés dans 1 mL de chloroforme deutéré ($CDCl_3$).

Calibration de l'échantillon : Les axes des déplacements chimiques $^{1}H$ et $^{13}C$ sont calibrés par rapport à l'impureté protonée du solvant ($CHCl_3$) à $\delta_{1H}$ = 7,2 ppm (pour le signal le plus déblindé) et $\delta_{13C}$ = 77 ppm (pour le signal le moins déblindé).

Attribution spectrale pour les copolymères d'éthylène et du 1,3-myrcène : Dans les représentations A, B, C ci-dessous, les symboles R1 et R2 représentent les points de rattachement de l'unité à la chaîne polymère. Les signaux des formes d'insertion du 1,3-diène A, B et C ont été observés sur les différents spectres enregistrés. D'après S. Georges et al.,

(Polymer 55 (2014) 3869-3878), le signal du groupement -CH= n°8" caractéristique de la forme C présente des déplacements chimiques $^1H$ et $^{13}C$ identiques au groupement -CH= n°3. Les déplacements chimiques des signaux caractéristiques des motifs A, B et C sont présentés dans le Tableau 1. Les motifs A, B et C correspondent respectivement aux unités de configuration 3,4, de configuration 1,2 et de configuration 1,4-trans. Les quantifications ont été effectuées à partir de l'intégration des spectres RMN 1D $^1H$ à l'aide du logiciel Topspin. Les signaux intégrés pour la quantification des différents motifs sont :

Ethylène : signal à 1,2 ppm correspondant à 4 protons
Myrcène total : signal n°1 (1,59 ppm) correspondant à 6 protons
Forme A : signal n°7 (4,67 ppm) correspondant à 2 protons
Forme B : signal n°8' (5,54 ppm) correspondant à 1 proton.

La quantification de la microstructure est réalisée en pourcentage molaire (%molaire) comme suit : %molaire d'un motif = intégrale 1H d'un motif * 100 / Σ (intégrales 1H de chaque motif).

Tableau 1

| $\delta^1H$ (ppm) | $\delta^{13}C$ (ppm) | Groupement |
|---|---|---|
| 5.54 | 146.4 | 8' |
| 5.07 | 124.6 | 3 + 8" |
| 4.97 - 4.79 | 112.0 | 9' |
| 4.64 | 108.5 | 7 |
| 2.03 | 26.5 | 4 |
| 2.0 - 1.79 | 31.8 ; 44.5 | 5 + 5' + 5" ; 8 |
| 1.59 | 25.9 et 17.0 | 1 |
| 1.2 | 36.8 - 24.0 | $CH_2$ éthylène |

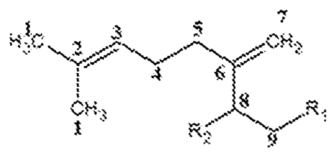
A

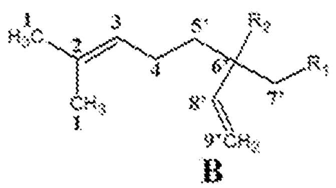
B

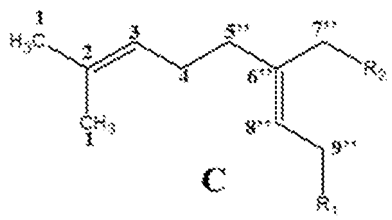
C

b) Détermination de la microstructure des terpolymères éthylène-butadiène-farnésène :

La caractérisation spectrale et les mesures de la microstructure de copolymère Ethylène-butadiène-farnésène sont réalisées par spectroscopie de Résonance Magnétique Nucléaire (RMN). Pour ces mesures, un spectromètre Bruker Avance III HD 400 MHz est utilisé, équipé d'une sonde Bruker cryo-BBFO z-grad 5 mm. Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétition de 128 et un nombre d'incréments de 128. Les expériences sont réalisées à 25 °C. 25 mg d'échantillon sont solubilisés dans 1 mL d'orthodichlorobenzène deutéré (ODCB). Les axes des déplacements chimiques $^1H$ et $^{13}C$ sont calibrés par rapport à l'impureté protonée du solvant à $\delta_{1H}$ = 7,2 ppm (pour le signal le plus déblindé) et $\delta_{13C}$ = 127 ppm (pour le signal le moins déblindé).

Les unités monomères possibles dans le terpolymère sont $-CH_2-CH(CH=CH_2)-$,$-CH_2-CH=CH-CH_2-$, $-CH_2-CH_2-$, le motif 1,2-cyclohexanediyle et les structures suivantes, $R_1$ et $R^2$ représentant la chaîne polymère :

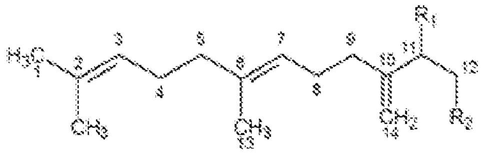

A

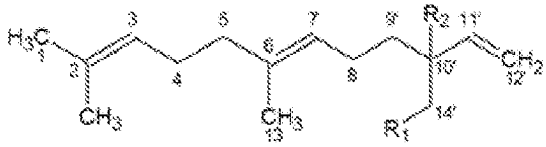

B

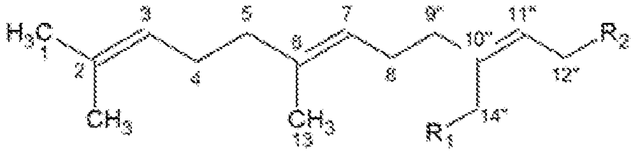

C

Les signaux de la forme d'insertion du farnésène A ont été observés sur les différents spectres enregistrés. Le signal du groupement -CH= n°11" caractéristique de la forme C présente des déplacements chimiques $^{1}H$ et $^{13}C$ identiques aux groupements -CH= n°3 et n°7.

Les déplacements chimiques des signaux caractéristiques du polymère sont présentés dans le Tableau 2 (Attribution des signaux $^{1}H$ et $^{13}C$ des terpolymères Ethylène-Butadiène-Farnésène autres que ceux des unités du 1,3-butadiène).

Tableau 2

| $\delta^{1}H$ (ppm) | $\delta^{13}C$ (ppm) | Groupement |
|---|---|---|
| 5.25 | 125.0 | 7 |
| 5.15 | 125.0 | 3, 11" |
| 4.87 | 109.0 | 14 |
| 1.59 et 1.67 | 24.6 et 17.5 | 1, 13 |
| 1.28 | 38 - 24.0 | $CH_2$ éthylène |

Les quantifications ont été effectuées à partir de l'intégration des spectres RMN 1D $^{1}H$ à l'aide du logiciel Topspin.

Les signaux intégrés pour la quantification des différents motifs sont :

Motif farnésène forme A à partir du signal **n°14 $CH_2$=** pour 2 protons,
Motif farnésène forme C à partir des signaux **n°3,11" et n°7 CH=** (en soustrayant la contribution de la forme A), pour 2 protons,
Motif farnésène forme B : à partir du signal **n°11'**, propre à cette forme, pour 1 proton. PB1-4 : Signal entre 5.71 ppm et 5.32 ppm correspond à 2 protons (en retirant la contribution PB1-2).
PB1-2 : signal entre 5.11 ppm et 4.92 ppm correspond à 2 protons.
Cycles cyclohexane : signal entre 1.80 ppm et 1.70 ppm correspond à 2 protons.
motif Ethylène en intégrant la totalité des signaux aliphatiques (de ~ 0.5 à 3 ppm) et en soustrayant la contribution de tous les autres motifs aliphatiques (PB1-4, PB1-2, cycle EBR, farnésène forme A et C).

La quantification de la microstructure est réalisée en pourcentage molaire (% molaire) comme suit :

$$\% \text{ molaire d'un motif} = \text{intégrale } ^{1}H \text{ d'un motif} * 100 / \Sigma \text{ (intégrales } ^{1}H \text{ de chaque motif).}$$

3) Viscosité Mooney :

La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (100°C). Après 1 minute de préchauffage, le rotor tourne au sein de l'éprouvette à 2 tours/minute et on mesure le couple utile pour entretenir ce mouvement après 4 minutes de rotation. La viscosité Mooney (ML) est exprimée en "unité Mooney" (UM, avec 1 UM=0,83 Newton.mètre).

4) Détermination de la température de transition vitreuse des polymères :

La température de transition vitreuse est mesurée au moyen d'un calorimètre différentiel ("Differential Scanning Calorimeter") selon la norme ASTM D3418 (1999).

5) Propriétés dynamiques :

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 50% (cycle aller), puis de 50% à 0,1% (cycle retour). Les résultats exploités sont le module complexe de cisaillement G* à 10%, le facteur de perte tan(δ). Pour le cycle retour, on indique la valeur maximale de tan(δ) observée, notée tan(δ)max. ainsi que la valeur de G* à 10%.

Préparation des élastomères E1 et E2 :

L'élastomère E1 est un copolymère statistique d'éthylène et de myrcène. Il contient 74% en mole d'éthylène, présente une température de transition vitreuse (Tg) de -60°C, une viscosité Mooney de122, une masse molaire moyenne en poids de 367000 g/mol, une dispersité (D) de 2.7. Il est préparé selon le mode opératoire suivant :
Le polymère est synthétisé selon le mode opératoire suivant : Dans un réacteur contenant à 80°C du méthylcyclohexane, de l'éthylène et du myrcène (My) dans les proportions indiquées dans le tableau 3, on ajoute du butyloctylmagnésium (BOMAG) pour neutraliser les impuretés du réacteur, puis le système catalytique (cf tableau 3). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en myrcène dans les proportions définies dans le tableau 3. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. Le système catalytique est un système catalytique préformé. Il est préparé dans le méthylcyclohexane à partir d'un métallocène, le $[Me_2Si(Flu)_2Nd(\mu\text{-}BH_4)_2Li(THF)]$, d'un co-catalyseur, le butyloctylmagnésium (BOMAG), et d'un monomère de préformation, le 1,3-butadiène, dans les teneurs indiquées dans le tableau 3. Il est préparé selon une méthode de préparation conforme au paragraphe II.1 de la demande de brevet WO 2017093654 A1.

L'élastomère E2 est un terpolymère statistique d'éthylène, de β-farnésène et de 1,3-butadiène. Il contient 78% en mole d'éthylène, présente une température de transition vitreuse (Tg) de -59°C, une masse molaire moyenne en poids de 161000 g/mol, une dispersité (D) de 1.5. Il est préparé selon le mode opératoire suivant :
Dans un réacteur contenant à 80°C du méthylcyclohexane, de l'éthylène du 1,3-butadiène et du β-farnésène (Far) dans les proportions indiquées dans le tableau 3, on ajoute du butyloctylmagnésium (BOMAG) pour neutraliser les impuretés du réacteur, puis le système catalytique (cf tableau 3). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène, 1,3-butadiène et en β-farnésène dans les proportions définies dans le tableau 3. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

Le système catalytique est un système catalytique préformé. Il est préparé dans le méthylcyclohexane à partir d'un métallocène, le $[Me_2Si(Flu)_2Nd(\mu\text{-}BH_4)_2Li(THF)]$, d'un co-catalyseur, le butyloctylmagnésium (BOMAG), et d'un monomère de préformation, le 1,3-butadiène, dans les teneurs indiquées dans le tableau 3. Il est préparé selon une méthode de préparation conforme au paragraphe II.1 de la demande de brevet WO 2017093654 A1.

Tableau 3

| Synthèse | Concentration métallocène (mmol/L) | Concentration agent alkylant (mmol/L) | Ratio molaire monomère préformation /métal Nd | Composition de l'alimentation (% mol Eth/Myr) | Composition de l'alimentation (% mol Eth/Btd/Far) |
|---|---|---|---|---|---|
| E1 | 0.09 | 0.17 | 90 | 60/40 | |
| E2 | 0.10 | 0.4 | 90 | | 84/9/7 |

La microstructure des élastomères E1 et E2 figurent dans le tableau 4 en indiquant les taux molaires des unités éthylène (Eth), des unités du 1,3-butadiène, des motifs 1,2-cyclohexanediyle (cycle), des unités du β-farnésène ou du myrcène. Dans le tableau 4 figurent également la proportion molaire des unités du β-farnésène ou du myrcène selon qu'elles sont de configuration 1,4, de configuration 1,2 et 3,4 et la masse molaire moyenne en nombre mesurée selon le paragraphe 1).

Tableau 4

| Elastomère | Eth | Btd | cycle | Far ou Myr | 1.4 | 1.2 | 3.4 | Mn (g/mol) |
|---|---|---|---|---|---|---|---|---|
| E1 | 74 | | | 26 | 8 | 1 | 17 | 367000 |
| E2 | 79 | 13 | 5 | 8 | 3 | | 5 | 161000 |

<u>Préparation des compositions de caoutchouc C1 à C4 :</u>

Quatre compositions de caoutchouc C1 à C4 dont le détail de la formulation figure dans le tableau 5, ont été préparées. La composition de caoutchouc a été préparée selon le procédé conforme à l'invention pour C1 ; les compositions de caoutchouc C2 à C4 selon un procédé non conforme à l'invention.

Pour la préparation de la composition C1, on introduit dans un mélangeur interne de volume 0.4 litre (taux de remplissage final : environ 70% en volume), dont la température initiale de cuve est d'environ 50°C, successivement l'élastomère, la charge renforçante, le dibenzyldithiocarbamate de zinc ainsi que les divers autres ingrédients à l'exception du soufre et du sulfénamide. On conduit alors un travail thermomécanique (phase non-productive) en une étape, qui dure au total environ 7 min, jusqu'à atteindre une température maximale de « tombée » de 140°C. On récupère le mélange ainsi obtenu, on le refroidit puis on incorpore le soufre et l'accélérateur primaire sur un mélangeur externe (mélangeur à cylindres) à 23°C, en mélangeant le tout (phase productive) pendant 5 minutes.

La préparation de la composition C2 se différencie de celle de la composition C1 en ce que le dibenzyldithiocarbamate de zinc est remplacé par un autre accélérateur secondaire, le disulfure de tétrabenzylthiurame (TBzTD). La quantité de disulfure de tétrabenzylthiurame ajouté correspond à une quantité molaire identique à celle du dithiocarbamate utilisée dans la composition C1.

La préparation de la composition C3 se différencie de celle de la composition C1 en ce que l'accélérateur secondaire est remplacé par un accélérateur primaire, le N-cyclohexyl-2-benzothiazyle sulfénamide (CBS). La quantité du N-cyclohexyl-2-benzothiazyle sulfénamide ajoutée au cours de la phase non productive correspond à une quantité molaire identique à celle du dithiocarbamate utilisée dans la composition C1.

La préparation de la composition C4 se différencie de celle des compositions C1 à C3 en ce ni un accélérateur secondaire tel qu'un thiurame et un dithiocarbamate, ni un accélérateur primaire tel qu'un sulfénamide n'est ajouté au cours de la phase productive. La composition C4 est préparé selon un procédé dit conventionnel au cours duquel le système de vulcanisation qui se compose de soufre et d'un accélérateur primaire est ajouté au cours de la phase dite non productive.

Les compositions C1 à C4 ainsi obtenues sont ensuite calandrées sous la forme de plaques (épaisseur 2 à 3mm) ou de feuilles fines de caoutchouc pour la mesure de leur propriétés physiques ou mécaniques, puis vulcanisées à 150°C dans une presse à cuisson.

Les résultats figurent dans le tableau 6. Les résultats sont exprimés en base 100 par rapport à la composition C4 prise comme témoin ([valeur de la composition /valeur de la composition C4]x100). Une valeur supérieure à 100 indique une valeur supérieure à celle du témoin. Pour tan δ max à 23°C, une valeur inférieure à 100 traduit une hystérèse moindre par rapport à celle de la composition C4, ce qui est favorable pour la résistance au roulement ; pour G*10% 23°C une valeur inférieure à 100 traduit une déformabilité plus grande que celle de la composition C4, ce qui est favorable pour l'adhérence.

Les résultats montrent que la composition C1 présente des propriétés hystérétiques plus faibles que les autres compositions de caoutchouc C2 à C4. En effet, la valeur de tan δ max à 23°C est la plus faible de toutes les autres valeurs de tan δ max à 23°C.

Non seulement, la composition C1 est la composition de caoutchouc la moins hystérétique, mais aussi la composition de caoutchouc la plus déformable, puisqu'elle présente un module complexe également le plus faible.

Tableau 5

| **Composition** | C1 | C2 | C3 | C4 |
|---|---|---|---|---|
| Mélangeur interne (pce) | | | | |
| Elastomère (1) | 100 | 100 | 100 | 100 |

(suite)

| Composition | C1 | C2 | C3 | C4 |
|---|---|---|---|---|
| Mélangeur interne (pce) | | | | |
| Silice (2) | 46 | 46 | 46 | 46 |
| Agent de couplage silane (3) | 4.6 | 4.6 | 4.6 | 4.6 |
| DPG (4) | 2.1 | 2.1 | 2.1 | 2.1 |
| ZnO (5) | 5 | 5 | 5 | 5 |
| Dithiocarbamate (6) | 2.6 | - | - | - |
| Thiurame (7) | - | 2.3 | - | - |
| Sulfénamide (8) | - | - | 2.2 | - |
| Mélangeur externe (pce) | | | | |
| Sulfénamide (8) | 1 | 1 | 1 | 1 |
| Soufre | 1 | 1 | 1 | 1 |

(1) Elastomère E1
(2) "Zeosil 1165 MP" de Solvay-Rhodia sous forme de microperles
(3) TESPT ("Si69" de Evonik)
(4) Diphénylguanidine (« Perkacit » DPG de la société Flexsys)
(5) Oxyde de Zinc de grade industriel de Umicore
(6) Dibenzyldithiocarbamate de zinc (« Perkacit ZBEC » de la société Performance Additives)
(7) Disulfure de tétrabenzylthiurame (« Perkacit TBzTD » de la société Performance Additives)
(8) N-cyclohexyl-2-benzothiazol-sulfénamide (« Santocure CBS » de Flexsys)

Tableau 6

| Composition | C1 | C2 | C3 | C4 |
|---|---|---|---|---|
| Tan $\delta$ max 23°C | 71 | 100 | 107 | 100 |
| G*10% 23°C | 81 | 111 | 116 | 100 |

Préparation des compositions de caoutchouc C5 à C6 :

Deux compositions de caoutchouc C5 et C6 dont le détail de la formulation figure dans le tableau 7, ont été préparées. La composition C5 est une composition préparée selon un procédé conforme à l'invention : elle est préparée selon le même procédé que la composition C1. La composition C6 est préparé selon un procédé conventionnel et non conforme à l'invention : elle est préparée selon le même procédé que la composition C4. Les compositions C5 et C6 obtenues sont ensuite calandrées sous la forme de plaques (épaisseur 2 à 3mm) ou de feuilles fines de caoutchouc pour la mesure de leur propriétés physiques ou mécaniques, puis vulcanisées à 150°C dans une presse à cuisson.

Les résultats figurent dans le tableau 8. Les résultats sont exprimés en base 100 par rapport à la composition C6 prise comme témoin ([valeur de la composition /valeur de la composition C6]x100). Une valeur supérieure à 100 indique une valeur supérieure à celle du témoin.

Les résultats montrent que la composition C5 est moins hystérétique que la composition C6 tout en préservant les propriétés de déformabilité.

Tableau 7

| Composition | C5 | C6 |
|---|---|---|
| Mélangeur interne (pce) | | |
| Elastomère (1) | 100 | 100 |
| Noir de carbone (2) | 4 | 4 |
| Silice (3) | 152 | 152 |

(suite)

| **Composition** | C5 | C6 |
|---|---|---|
| Mélangeur interne (pce) | | |
| Agent de couplage silane (4) | 15.2 | 15.2 |
| DPG (5) | 3.2 | 3.2 |
| Antioxydant (6) | 5.5 | 5.5 |
| Cire antiozone (7) | 2.5 | 2.5 |
| Plastifiant (8) | 42 | 42 |
| Plastifiant (9) | 49 | 49 |
| ZnO (10) | 0.9 | 0.9 |
| Acide stéarique | 3 | 3 |
| Dithiocarbamate (11) | 2.6 | - |
| Mélangeur externe (pce) | | |
| Sulfénamide (12) | 2.3 | 2.3 |
| Soufre | 0.9 | 0.9 |

(1) Elastomère E2
(2) N234
(3) "Zeosil 1165 MP" de Solvay-Rhodia sous forme de microperles
(4) TESPT ("Si69" de Evonik)
(5) Diphénylguanidine (« Perkacit » DPG de la société Flexsys)
(6) Mélange selon un ratio massique 70/30 de N-1,3-diméthylbutyl-N-phényl-para-phenyldiamine (« Santoflex 6-PPD » de Flexsys) et de 2,2,4-triméhyl-1,2-dihydroquinoline)
(7) Cire anti-ozone « VARAZON 4959 » de la société Sasol Wax
(8) Résine plastifiante d'hydrocarbure de pétrole « Escorez 5000 series » de la société Exxon Mobil (Tg = 52°C)
(9) Huile MES « Catenex SNR » commercialisée par la société Shell
(10) Oxyde de Zinc de grade industriel de Umicore
(11) Dibenzyldithiocarbamate de zinc (« Perkacit ZBEC » de la société Performance Additives)
(12) N-cyclohexyl-2-benzothiazol-sulfénamide (« Santocure CBS » de Flexsys)

Tableau 8

| **Composition** | C5 | C6 |
|---|---|---|
| Tan $\delta$ max 23°C | 70 | 100 |
| G*10% 23°C | 100 | 100 |

En résumé, les compositions de caoutchouc préparées selon le procédé conforme à l'invention sont celles qui lorsqu'elles sont utilisées dans une bande de roulement d'un pneumatique, confèrent au pneumatique le meilleur compromis entre les performances de résistance au roulement et d'adhérence.

## Revendications

**1.** Procédé de préparation d'une composition de caoutchouc qui comprend plus de 50 pce d'un élastomère diénique fortement saturé, une charge renforçante et un agent de couplage silane

l'élastomère diénique fortement saturé étant un copolymère contenant des unités éthylène et des unités d'un 1,3-diène de formule (I),

$$CH_2=CR-CH=CH_2 \qquad (I)$$

le symbole R représentant une chaîne hydrocarbonée ayant 3 à 20 atomes de carbone les unités éthylène représentant au moins 50% en mole des unités monomères du copolymère,
la charge renforçante comprenant une silice,
lequel procédé comprend une étape a) suivie d'une étape b) :

a) le mélangeage par malaxage à une température supérieure à 110°C de l'élastomère diénique fortement saturé, de la charge renforçante et de l'agent de couplage silane avec un accélérateur secondaire dithiocarbamate,
b) puis l'incorporation de soufre et d'un sulfénamide dans la composition de caoutchouc par malaxage à une température inférieure à 110°C.

2. Procédé selon la revendication 1 dans lequel l'étape a) est réalisée à une température comprise entre 110°C et 170°C, préférentiellement à une température comprise entre 120°C et 160°C.

3. Procédé selon l'une quelconque des revendications 1 à 2 dans lequel l'étape b) se fait à une température allant de 20°C à 100°C.

4. Procédé selon l'une quelconque des revendications 1 à 3 dans lequel le dithiocarbamate est un dithiocarbamate de zinc, préférentiellement le dibenzyldithiocarbamate de zinc.

5. Procédé selon l'une quelconque des revendications 1 à 4 dans lequel le sulfénamide est un benzothiazolesulfénamide, préférentiellement le N-cyclohexyl-2-benzothiazyle sulfénamide.

6. Procédé selon l'une quelconque des revendications 1 à 5 dans lequel la silice représente plus de 50% en masse de la charge renforçante, préférentiellement plus de 85% en masse de la charge renforçante.

7. Procédé selon l'une quelconque des revendications 1 à 6 dans lequel le taux de l'élastomère diénique fortement saturé dans la composition de caoutchouc varie dans un domaine allant de 80 à 100 pce, de préférence de 90 à 100 pce.

8. Procédé selon l'une quelconque des revendications 1 à 7 dans lequel le 1,3-diène de formule (I) est le myrcène, le β-farnésène ou un mélange de myrcène et de β-farnésène.

9. Procédé selon l'une quelconque des revendications 1 à 8 dans lequel l'élastomère diénique fortement saturé contient en outre des unités d'un 1,3-diène ayant 4 à 6 atomes de carbone.

10. Procédé selon l'une quelconque des revendications 1 à 9 dans lequel l'élastomère diénique fortement saturé est un copolymère d'éthylène et d'un 1,3-diène de formule (I) ou un terpolymère, copolymère d'éthylène, d'un 1,3-diène de formule (I) et d'un 1,3-diène ayant 4 à 6 atomes de carbone.

11. Procédé selon l'une quelconque des revendications 9 à 10 dans lequel le 1,3-diène ayant 4 à 6 atomes de carbone est le 1,3-butadiène.

12. Procédé selon l'une quelconque des revendications 1 à 11 dans lequel l'élastomère diénique fortement saturé comprend au moins 60% molaire d'unité éthylène, particulièrement au moins 65% molaire d'unité éthylène, plus particulièrement au moins 70% molaire d'unité éthylène.

13. Procédé selon l'une quelconque des revendications 1 à 12 dans lequel l'élastomère diénique fortement saturé comprend au plus 90% molaire d'unité éthylène, de préférence au plus 85% molaire d'unité éthylène.

14. Procédé selon l'une quelconque des revendications 1 à 13 dans lequel l'étape b) est suivie d'une étape de vulcanisation de la composition de caoutchouc, de préférence à une température supérieure à 110°C, de manière plus préférentielle comprise entre 110°C et 180°C.

**Patentansprüche**

1. Verfahren zur Herstellung einer Kautschukzusammensetzung, die mehr als 50 phe eines hochgesättigten Dienelastomers, einen verstärkenden Füllstoff und ein Silan-Kupplungsmittel umfasst,

wobei es sich bei dem hochgesättigten Dienelastomer um ein Copolymer handelt, das Ethyleneinheiten und Einheiten eines 1,3-Diens der Formel (I) enthält,

$$CH_2=CR-CH=CH_2 \quad (I)$$

wobei des Symbol R für eine Kohlenwasserstoffkette mit 3 bis 20 Kohlenstoffatomen steht, wobei die Ethyleneinheiten mindestens 50 Mol-% der Monomereinheiten des Copolymers ausmachen,
wobei der verstärkende Füllstoff eine Kieselsäure umfasst,
wobei das Verfahren einen Schritt a) gefolgt von einem Schritt b) umfasst:

a) Mischen des hochgesättigten Dienelastomers, des verstärkenden Füllstoffs und des Silan-Kupplungsmittels mit einem sekundären Dithiocarbamat-Beschleuniger durch Kneten bei einer Temperatur von mehr als 110 °C,
b) dann Einarbeiten des Schwefels und eines Sulfenamids in die Kautschukzusammensetzung durch Kneten bei einer Temperatur von weniger als 110 °C.

**2.** Verfahren nach Anspruch 1, wobei der Schritt a) bei einer Temperatur zwischen 110 °C und 170 °C, bevorzugt bei einer Temperatur zwischen 120 °C und 160 °C, durchgeführt wird.

**3.** Verfahren nach einem der Ansprüche 1 bis 2, wobei der Schritt b) bei einer Temperatur im Bereich von 20 °C bis 100 °C erfolgt.

**4.** Verfahren nach einem der Ansprüche 1 bis 3, wobei es sich bei dem Dithiocarbamat um ein Zinkdithiocarbamat, bevorzugt Zinkdibenzyldithiocarbamat, handelt.

**5.** Verfahren nach einem der Ansprüche 1 bis 4, wobei es sich bei dem Sulfenamid um ein Benzothiazolsulfenamid, bevorzugt N-Cyclohexyl-2-benzothiazylsulfenamid, handelt.

**6.** Verfahren nach einem der Ansprüche 1 bis 5, wobei die Kieselsäure mehr als 50 Massen-% des verstärkenden Füllstoffs, bevorzugt mehr als 85 Massen-% des verstärkenden Füllstoffs, ausmacht.

**7.** Verfahren nach einem der Ansprüche 1 bis 6, wobei der Gehalt an hochgesättigtem Dienelastomer in der Kautschukzusammensetzung in einem Bereich von 80 bis 100 phe und vorzugsweise von 90 bis 100 phe variiert.

**8.** Verfahren nach einem der Ansprüche 1 bis 7, wobei es sich bei dem 1,3-Dien der Formel (I) um Myrcen, β-Farnesen oder eine Mischung von Myrcen und β-Farnesen handelt.

**9.** Verfahren nach einem der Ansprüche 1 bis 8, wobei das hochgesättigte Dienelastomer außerdem Einheiten eines 1,3-Diens mit 4 bis 6 Kohlenstoffatomen enthält.

**10.** Verfahren nach einem der Ansprüche 1 bis 9, wobei es sich bei dem hochgesättigten Dienelastomer um ein Copolymer von Ethylen und einem 1,3-Dien der Formel (I) oder ein Terpolymer, ein Copolymer von Ethylen, einem 1,3-Dien der Formel (I) und einem 1,3-Dien mit 4 bis 6 Kohlenstoffatomen, handelt.

**11.** Verfahren nach einem der Ansprüche 9 bis 10, wobei es sich bei dem 1,3-Dien mit 4 bis 6 Kohlenstoffatomen um 1,3-Butadien handelt.

**12.** Verfahren nach einem der Ansprüche 1 bis 11, wobei das hochgesättigte Dienelastomer mindestens 60 Mol-% Ethyleneinheiten, insbesondere mindestens 65 Mol-% Ethyleneinheiten, spezieller mindestens 70 Mol-% Ethyleneinheiten, umfasst.

**13.** Verfahren nach einem der Ansprüche 1 bis 12, wobei das hochgesättigte Dienelastomer höchstens 90 Mol-% Ethyleneinheiten, vorzugsweise höchstens 85 Mol-% Ethyleneinheiten, umfasst.

**14.** Verfahren nach einem der Ansprüche 1 bis 13, wobei auf den Schritt b) ein Schritt der Vulkanisation der Kautschukzusammensetzung, vorzugsweise bei einer Temperatur von mehr als 110 °C, weiter bevorzugt zwischen 110 °C und

180 °C, folgt.

## Claims

1. Process for preparing a rubber composition that comprises more than 50 phr of a highly saturated diene elastomer, a reinforcing filler and a silane coupling agent

    the highly saturated diene elastomer being a copolymer containing ethylene units and units of a 1,3-diene of formula (I),

    $$CH_2=CR\text{-}CH=CH_2 \qquad (I)$$

    the symbol R representing a hydrocarbon chain having 3 to 20 carbon atoms, the ethylene units representing at least 50 mol% of the monomer units of the copolymer,
    the reinforcing filler comprising a silica,
    which process comprises a step a) followed by a step b):

    a) mixing the highly saturated diene elastomer, the reinforcing filler and the silane coupling agent with a dithiocarbamate secondary accelerator by kneading at a temperature above 110°C,
    b) then incorporating sulfur and a sulfenamide into the rubber composition by kneading at a temperature below 110°C.

2. Process according to Claim 1, in which step a) is carried out at a temperature of between 110°C and 170°C, preferentially at a temperature of between 120°C and 160°C.

3. Process according to either one of Claims 1 and 2, in which step b) is carried out at a temperature ranging from 20°C to 100°C.

4. Process according to any one of Claims 1 to 3, in which the dithiocarbamate is a zinc dithiocarbamate, preferentially zinc dibenzyldithiocarbamate.

5. Process according to any one of Claims 1 to 4, in which the sulfenamide is a benzothiazolesulfenamide, preferentially N-cyclohexyl-2-benzothiazylsulfenamide.

6. Process according to any one of Claims 1 to 5, in which the silica represents more than 50% by mass of the reinforcing filler, preferentially more than 85% by mass of the reinforcing filler.

7. Process according to any one of Claims 1 to 6, in which the content of highly saturated diene elastomer in the rubber composition varies within a range extending from 80 to 100 phr, preferably from 90 to 100 phr.

8. Process according to any one of Claims 1 to 7, in which the 1,3-diene of formula (I) is myrcene, β-farnesene or a mixture of myrcene and β-farnesene.

9. Process according to any one of Claims 1 to 8, in which the highly saturated diene elastomer also contains units of a 1,3-diene having 4 to 6 carbon atoms.

10. Process according to any one of Claims 1 to 9, in which the highly saturated diene elastomer is a copolymer of ethylene and of a 1,3-diene of formula (I) or a terpolymer, copolymer of ethylene, of a 1,3-diene of formula (I) and of a 1,3-diene having 4 to 6 carbon atoms.

11. Process according to either one of Claims 9 and 10, in which the 1,3-diene having 4 to 6 carbon atoms is 1,3-butadiene.

12. Process according to any one of Claims 1 to 11, in which the highly saturated diene elastomer comprises at least 60 mol% of ethylene units, particularly at least 65 mol% of ethylene units, more particularly at least 70 mol% of ethylene units.

**13.** Process according to any one of Claims 1 to 12, in which the highly saturated diene elastomer comprises at most 90 mol% of ethylene units, preferably at most 85 mol% of ethylene units.

**14.** Process according to any one of Claims 1 to 13, in which step b) is followed by a step of vulcanizing the rubber composition, preferably at a temperature above 110°C, more preferentially of between 110°C and 180°C.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2007054223 A
- WO 2019180356 A1
- WO 2020074804 A1
- WO 2021053051 A1
- WO 2021053296 A1
- WO 2007054224 A
- WO 2017093654 A1
- WO 2018020122 A1
- WO 03016215 A1
- WO 03016387 A1
- WO 03002648 A1
- US 2005016651 A1
- WO 03002649 A1
- US 2005016650 A1
- WO 02083782 A1
- US 7217751 B2


### Littérature non-brevet citée dans la description


- **BRUNAUER-EMMETT-TELLER**. *The Journal of the American Chemical Society*, February 1938, vol. 60, 309
- **D'APRÈS S. GEORGES et al.** *Polymer*, 2014, vol. 55, 3869-3878